## Europäisches Patentamt
## European Patent Office
## Office européen des brevets

(11) Veröffentlichungsnummer: **0 242 436 B1**

# EUROPÄISCHE PATENTSCHRIFT

(45) Veröffentlichungstag der Patentschrift: **18.12.91**

(51) Int. Cl.⁵: **G01B 11/30**

(21) Anmeldenummer: **86114475.6**

(22) Anmeldetag: **18.10.86**

(54) **Vorrichtung zur Messung kleiner Längen.**

(30) Priorität: 26.03.86 DE 3610154
11.09.86 DE 3630887

(43) Veröffentlichungstag der Anmeldung:
**28.10.87 Patentblatt 87/44**

(45) Bekanntmachung des Hinweises auf die
Patenterteilung:
**18.12.91 Patentblatt 91/51**

(84) Benannte Vertragsstaaten:
**CH FR GB IT LI SE**

(56) Entgegenhaltungen:
EP-A- 0 164 181      DE-A- 2 845 850
DE-A- 3 422 223      DE-A- 3 425 476
DE-A- 3 428 474      US-A- 4 120 588
US-A- 4 538 911

LASER UND OPTOELEKTRONIK, Nr. 1, 1984,
Seiten 17-30; R. KIST et al.: "Faser-und
integriert-optische Monomode-Sensoren:
eine Übersicht; Fiber and integrated optical
monomode sensors: a review"

LASER UND OPTOELEKTRONIK, Nr. 2, 1983,
Seiten 111-116; K.H. TIETGEN et al.:
"Frequenzumsetzung mit integrierter Optik:
Beispiel der Umsetzung eines Fernsehkanals im optischen Frequenzbereich"

MEASUREMENT TECHNIQUES, Band 21, Nr.
11, November 1978, Seiten 1588-1594, Plenum Publishing Corp.; V.S. LUK'YANOV:
"Metrology and measurement techniques-
78pi exhibition"

MESSEN + PRÜFEN, Nr. 2, November 1981,
Seiten 757-761, Bad Wörlshofen, DE; F.E.
WAGNER: "Selbstkalibrierende Messsysteme"

(73) Patentinhaber: **Hommelwerke GmbH**
**Alte Tuttlinger Strasse 20**
**W-7730 VS-Schwenningen(DE)**

(72) Erfinder: **Ulbers, Gerd, Dr.**
**Lindenbaumstrasse 10**
**W-7730 VS-Weilersbach(DE)**
Erfinder: **Hutter, Karl, Dipl. Ing.**
**Ortholzweg 11**
**W-7730 VS-Mühlhausen(DE)**

(74) Vertreter: **Leine, Sigurd, Dipl.-Ing. et al**
**LEINE & KÖNIG Patentanwälte Burckhardt-**
**strasse 1**
**W-3000 Hannover 1(DE)**

## Beschreibung

Die Erfindung betrifft eine Vorrichtung der im Oberbegriff des Anspruchs 1 genannten Art zur Messung kleiner Längen.

Vorrichtungen der betreffenden Art zur Messung kleiner Längen sind seit langem bekannt. Beispielsweise die DE-PS 11 00 978 zeigt in Abbildung 9 eine solche Vorrichtung, die als mechanisch-induktiver Wandler ausgebildet ist. Die Tastspitze bewegt einen Eisenkern in einem Spulensystem, das in eine Meßbrücke einbezogen ist, die ein elektrisches Ausgangssignal in Abhängigkeit von den Bewegungen der Tastspitze abgibt. Das verhältnismäßig hohe Gewicht des zu bewegenden Eisenkerns ist nachteilig für die Abtastgeschwindigkeit und bewirkt außerdem einen starken Verschleiß der Tastspitze. Dies um so mehr, je feiner die Tastspitze ist. Feine Tastspitzen sind jedoch zur Abtastung der Feinstruktur einer Oberfläche erforderlich. Ein weiterer Nachteil ist die begrenzte Linearität, insbesondere bei großen Meßhüben.

Durch die DE-OS 34 25 476 ist eine Vorrichtung der betreffenden Art zur Messung kleiner Längen bekannt, die einen Lagemelder nach dem Zweistrahl-Laser-Interferometer-Prinzip verwendet, bei dem die einzelnen Strahlen des Interferometers frei im Raum zwischen einer Laserlichtquelle und Spiegeln geführt sind. Diese Bauform ist verhältnismäßig groß, was die Verwendbarkeit in der Praxis beträchtlich einschränkt.

Durch die DE-OS 34 22 223 ist ebenfalls eine Vorrichtung der betreffenden Art bekannt, die in gleicher Weise wie die zuvor genannte Schrift ein Interferometer mit verteilten optischen Elementen aufweist, die nur eine begrenzte Miniaturisierung zulassen und außerdem einen beträchtlichen Konstruktionsaufwand erfordern.

Der Erfindung liegt die Aufgabe zugrunde, eine Vorrichtung der betreffenden Art zur Messung kleiner Längen zu schaffen, deren bewegte Teile ein niedriges Gewicht haben können, deren Tastspitze einen kleinen Abrundungsradius haben kann und die darüber hinaus eine hohe Abtastgeschwindigkeit bei der Abtastung der Feinstruktur einer Oberfläche sowie eine hohe Linearität auch bei großen Meßhüben ermöglicht.

Die der Erfindung zugrundeliegende Aufgabe wird durch die im Anspruch 1 angegebene Lehre gelöst.

Die Erfindung beruht auf dem Grundgedanken, die Stellung bzw. die Bewegungen des mechanischen Abtastgliedes für die abzutastende Länge praktisch gewichtslos mit einer optischen Methode allein mit Hilfe einer spiegelnden Oberfläche an dem Abtastglied mit Hilfe von optischen Phasenmessungen abzutasten. Die Phasenmessung erfolgt dabei mit Hilfe eines Interferometers, das in Teilen aus der Zeitschrift "Laser und Optoelektronik", 1/1984, S.19, Bild 3, bekannt ist. Dieses bekannte Interferometer wird jedoch so abgewandelt, daß das Licht aus dem Meßwellenleiter mit Hilfe einer optischen Einrichtung ausgekoppelt, auf den mit der Tastspitze verbundenen Spiegel geleitet und von diesem auf dem gleichen Wege in den Meßwellenleiter zurückgeführt wird. Außer den Mitteln zur Halterung und Führung der Tastspitze ist diese mit keinem zusätzlichen Gewicht belastet, so daß das Gewicht der abtastenden Mittel minimal ist, so daß ein geringer Auflagedruck genügt, damit die Tastspitze beispielsweise bei der Abtastung der Feinkontur einer Werkstückoberfläche sicher der Oberfläche folgt und damit genau die der Oberflächenkontur entsprechenden Längenänderungen abtastet, die dann durch das Interferometer in entsprechende elektrische Signale umgewandelt werden. Die Abtastgeschwindigkeit kann dabei gleichzeitig sehr hoch sein.

Die optische Einrichtung zur Auskopplung des Lichts auf den Meßwellenleiter besteht zweckmäßigerweise aus einem Beugungsgitter, wie es an sich beispielsweise durch die Zeitschrift "LASER MAGAZIN", 4/1985, S.75 in Verbindung mit einem Abtastkopf zur Abtastung von Schallplatten mit optischer Aufzeichnungsspur bekannt ist. Es eignen sich aber auch andere optische Vorrichtungen, mit denen das Licht aus dem Meßwellenleiter auf den Spiegel gerichtet werden kann, und zwar vorzugsweise in Form eines Parallelstrahls oder Parallelstrahlenbündels, obwohl auch in manchen Fällen eine teilweise oder vollständige Fokussierung auf den Meßspiegel zweckmäßig sein kann.

Das Interferometer kann jede beliebige Ausführungsform haben. Statt begrenzter Lichtleiter können auch lichtleitende flächige Schichten verwendet werden.

Obwohl sich nach der Lehre des Anspruchs 1 der Meßspiegel an einer Tastspitze oder einem sich damit bewegenden Teil befindet, so daß die Länge mechanisch abgetastet wird, ist dem Fachmann klar, daß als Meßspiegel unmittelbar eine Oberfläche verwendet werden kann, deren Abstand als Längenwert gemessen werden soll und die ausreichend spiegelnde Eigenschaften hat.

Die bewegliche Lagerung der Tastspitze kann die Form eines doppelarmigen Hebels haben, an dessen einem Ende sich die Tastspitze und an dessen anderem Ende sich der Meßspiegel befindet. Es ist aber auch möglich, nur einen einarmigen Hebel zu verwenden, bei dem sich der Spiegel im Bereich der Tastspitze befindet. Dadurch wird die bei Auslenkungen der Tastspitze zu bewegende Masse noch weiter verringert. Der Meßspiegel kann sich aber auch an dem einen Ende eines parallel geführten Meßstößels befinden, an dessen anderem Ende sich die Tastspitze befindet.

Bei beiden Formen der beweglichen Lagerung, insbesondere aber bei der Hebellagerung der Tastspitze, ist es zweckmäßig, den Meßspiegel als Tripelspiegel oder als Glaskugel auszuführen, so daß sichergestellt ist, daß auch bei Änderungen der Winkelstellung des Meßspiegels das Licht immer in die gleiche Richtung zu der optischen Einrichtung zurückgeworfen wird, die das Licht aus dem Meßwellenleiter auskoppelt und es auch wieder einkoppelt.

Obwohl bei Längenmessungen, im Bereich unterhalb der halben Wellenlänge des von dem Laser abgegebenen Lichts als Anzeigeeinrichtung auch ein Spannungs- oder Strommesser verwendbar ist, dessen Ausschlag der Intensität des von dem lichtelektrischen Wandler aufgefangenen Lichts bzw. der von diesem abgegebenen elektrischen Spannung oder dem entsprechenden Strom entspricht, ist es zur Erfassung eines großen Meßbereichs mit einem Vielfachen der Wellenlänge des Meßlichts zweckmäßig, als Anzeigeeinrichtung einen Zähler zu verwenden, der die der gemessenen Längenänderung entsprechenden Lichtintensitätsänderungen aufgrund der Interferenz zählt und somit einen Zählwert anzeigt, der unter Berücksichtigung der Wellenlänge des Meßlichts völlig proportional ist der von der Tastspitze abgetasteten Länge oder Längenänderung. Ein Meßvorgang läuft dabei beispielsweise so ab, daß die Tastspitze auf den Anfang der zu messenden Länge gebracht und dabei der Zähler auf null gestellt wird. Danach wird die Tastspitze auf den Endwert der zu messenden Länge gebracht und der Zähler abgelesen. Soll eine neue Länge gemessen werden, so muß dieser Vorgang wiederholt werden.

Um eine Nullstellung des Zählers zu vermeiden und Längen eindeutig in unterschiedlichen Auslenkungsrichtungen der Tastspitze messen zu können, ist es zweckmäßig, gemäß Anspruch 7 dafür Sorge zu tragen, die Richtung der Bewegung der Tastspitze festzustellen und in Abhängigkeit von dieser Richtung die Zählrichtung des als Vor-Rückwärtszähler ausgebildeten Zählers zu steuern. Die Feststellung der Richtung der Bewegung der Tastspitze erfolgt in der Weise, daß von der Meßleitung mit Hilfe eines Kopplers, wie er beispielsweise durch die Dissertation von Dipl.-Ing. H. Schlaak, Berlin 1984, S. 28,29 bekannt ist, ein Teil des Lichts aus dem Bezugswellenleiter ausgekoppelt und mit Hilfe eines Phasenmodulators, wie er beispielsweise durch die Zeitschrift "Laser und Optoelektronik", 1/1984, S. 27, Bild 33, bekannt ist, in einer gegenüber der Phasenlage am Ende des Bezugswellenleiters um 90° verschobenen Phasenlage an einen weiteren lichtelektrischen Wander geführt wird, so daß die beiden lichtelektrischen Wandler bei Bewegungen der Tastspitze zwei um 90° gegeneinander verschobene Meßspannungen abgeben, die zusammen ein Drehfeld bilden, dessen Drehrichtung der Bewegungsrichtung der Tastspitze entspricht. Mit Hilfe dieser Drehrichtung wird dann die Zählrichtung des Vor-Rückwärtszählers gesteuert. Diese Art der Erkennung der Bewegungsrichtung ist für sich beispielsweise in der Dissertationsschrift "Ein LaserInterferometer zur fotoelektrischen Bewegungsvermessung in beiden Lateralkoordinaten" von Gerd Ulbers, 1981, Universität Hannover, S. 58 ff, insbesondere S. 68, Abb. 29, beschrieben.

In dieser Dissertationsschrift ist auch eine Möglichkeit beschrieben, die Meßgenauigkeit durch Unterteilung der Periode der Drehspannung zu erhöhen, s. dort Abschnitt 10.4. Die Weiterbildung der Erfindung gemäß Anspruch 8 besteht darin, diese Signalperiodenunterteilung auch bei der erfindungsgemäßen Vorrichtung zur Erhöhung der Auflösung einzusetzen.

Der Meßwellenleiter, der Bezugswellenleiter und gegebenenfalls auch der Abzweigwellenleiter sind in an sich bekannter Weise in oder auf der Oberfläche einer gemeinsamen Platte gebildet. Laser und/oder lichtelektrische Wandler sind nach einer Weiterbildung gemäß Anspruch 9 ganz einfach an die Seitenkanten der Platte angeschlossen, an denen auch die Wellenleiter münden. Der Spiegel des Bezugswellenleiters ist ganz einfach durch eine Verspiegelung der Kante im Bereich des an dieser Kante mündenden Bezugswellenleiters gebildet. Die Ausbildung der Wellenleiter in der Platte kann dabei in an sich bekannter Weise erfolgen, und zwar entweder durch Aufbringen von Glasfasern auf die Platte oder durch Ausbildung der Wellenleiter in der Oberfläche der Platte, wie das beispielsweise an sich durch die Zeitschrift "Laser und Optoelektronik", 1984, Nr. 1, S. 26, Bild 31, bekannt ist. Auch die Phaseneinstelleinrichtung bei der Weiterbildung gemäß Anspruch 7 läßt sich unmittelbar auf der Oberfläche der Platte ausbilden, wie das an sich beispielsweise bereits durch die oben zitierte Zeitschrift "Laser und Optoelektronik", 1983, S. 112, Bild 3, bekannt ist. Schließlich läßt sich auch gemäß einer anderen Weiterbildung die optische Einrichtung, die das Licht aus dem Meßwellenleiter auf den Meßspiegel richtet und auch von dort wieder auffängt, unmittelbar auf der Oberfläche der Platte ausbilden, und zwar in Form eines auf der Platte angebrachten Beugungsgitters entsprechend der oben zitierten Literaturstelle "LASER MAGAZIN", 1985, S. 75. Insgesamt lassen sich also alle optischen bzw. optoelektrischen Teile wie auch die lichtelektrischen Wandler und/oder der Laser der erfindungsgemäßen Vorrichtung auf einer einzigen Platte integrieren, so daß eine einfache, billige Fertigung bei geringsten Abmessungen möglich ist. Um Temperatureinflüsse fernzuhalten, kann die gesamte Platte mit den optoelektronischen Komponenten auf einem geregelten Peltierelement angeordnet sein.

Eine besonders zweckmäßige Ergänzung der Erfindung ist im Anspruch 13 angegeben, wonach ein optoelektronischer Entfernungsmesser vorgesehen ist, der bei einem vorgegebenen Entfernungswert ein elektrisches Signal abgibt, das den für die Anzeigeeinrichtung verwendeten Zähler auf null stellt. Dieser optoelektronische Entfernungsmesser braucht keine große Genauigkeit über einen größeren Meßweg zu haben, sondern lediglich eine große Genauigkeit bei dem vorgegebenen Entfernungswert bzw. Längenmeßwert, um dort exakt den Zähler auf null zu stellen.

Als optoelektronischer Entfernungsmesser eignet sich für diesen Zweck besonders gut ein in seinen Grundprinzipien an sich bekanntes Fokuslagenmeßsystem, wie es im Anspruch 14 angegeben ist. Es hat eine hohe Genauigkeit, wenn die in der Entfernung gemessene, reflektierende Fläche genau in Fokuslage ist. Dies wird bei der Erfindung zur Nullstellung ausgenutzt, um das zwar äußerst genau im nm-Bereich über große Strecken, jedoch nur relativ messende Interferometer mit einem Bezugs- oder Nullwert zu versehen, so daß zu den genannten guten Eigenschaften auch noch die Möglichkeit hinzu kommt, absolute Längen messen zu können.

Als Fokussiereinrichtung können Linsen verwendet werden, in gleicher Weise jedoch auch fokussierende optische Gitter, wobei es zweckmäßig ist, das gesamte optische System in einer lichtleitenden Schicht einer Platte auszubilden, wobei Laser und Fotodioden an den entsprechenden Stellen an- oder eingekoppelt sind. Ein derartiges optoelektronisches System ist aus der Zeitschrift "LASER MAGAZIN", 4/85, S. 75, bekannt.

Das Fokuslagenmeßsystem kann ein von dem Interferometer völlig unabhängiges System sein mit einem separaten Spiegel an der Tastspitze oder an einem sich damit bewegenden Teil. Diese Ausführungsform hat den Vorteil, daß bei fokussiertem Strahl des Interferometers der Störabstand des Interferometersignals gegenüber parallelem Licht groß ist.

Grundsätzlich ist es aber gemäß einer anderen Ausführungsform der Kombination von Interferometer und Fokuslagenmeßsystem auch möglich, für beide Systeme den gleichen Laser zu verwenden, indem aus dem Licht, das von dem Meßspiegel reflektiert worden ist, ein Teil mittels eines halbdurchlässigen Spiegels abgezweigt und dann in der für das Fokuslagenmeßsystem typischen Weise weiterverwendet wird.

Sind sowohl Interferometer als auch Fokuslagenmeßsystem in oder auf optisch leitenden Platten ausgebildet, so ist es zweckmäßig, diese Platten als gemeinsames Stück auszubilden. Dadurch ergibt sich eine stabile und geringe Bauhöhe. Dies wird auch durch eine andere Weiterbildung der Erfindung ermöglicht, bei der über dem ersten Fokussiergitter ein Umlenkspiegel mit einer Neigung von ungefähr 45° zur Platte angeordnet ist, der den im wesentlichen senkrecht aus der Platte austretenden Strahl in die Plattenebene umlenkt, so daß auch der Strahlengang außerhalb der Platte in Plattenrichtung verläuft, was besonders vorteilhaft ist, wenn sich der Meßspiegel am hinteren Ende eines Meßstößels befindet, dessen vorderes Ende die Tastspitze aufweist.

Anhand der Zeichnung soll die Erfindung näher erläutert werden.

Fig. 1      zeigt den wesentlichen optoelektronischen Teil eines Ausführungsbeispiels der Erfindung in der Draufsicht,

Fig. 2      ist eine Seitenansicht der Fig. 1 einschließlich des mechanischen Abtastteils der Vorrichtung,

Fig. 3      zeigt eine Abwandlung der Fig. 2,

Fig. 4      zeigt ein Blockschaltbild der an die optoelektrische Einrichtung gemäß Fig. 1 angeschlossenen Anzeigeeinrichtung,

Fig. 5      zeigt im Schnitt ein Ausführungsbeispiel einer Vorrichtung gemäß der Erfindung zur Absolutmessung,

Fig. 6      zeigt den optischen Teil von Fig. 5 von der einen Seite,

Fig. 7      zeigt den optischen Teil von Fig. 5 von der anderen Seite,

Fig. 8      verdeutlicht den Schichtaufbau des optischen Teils gemäß den Fig. 6 und 7,

Fig. 9      zeigt ein zweites Ausführungsbeispiel in prinzipieller Darstellung,

Fig. 10      ist eine Seitenansicht der Fig. 9, und

Fig. 11      zeigt im Schnitt ein drittes Ausführungsbeispiel einer Vorrichtung gemäß der Erfindung zur Absolutmessung.

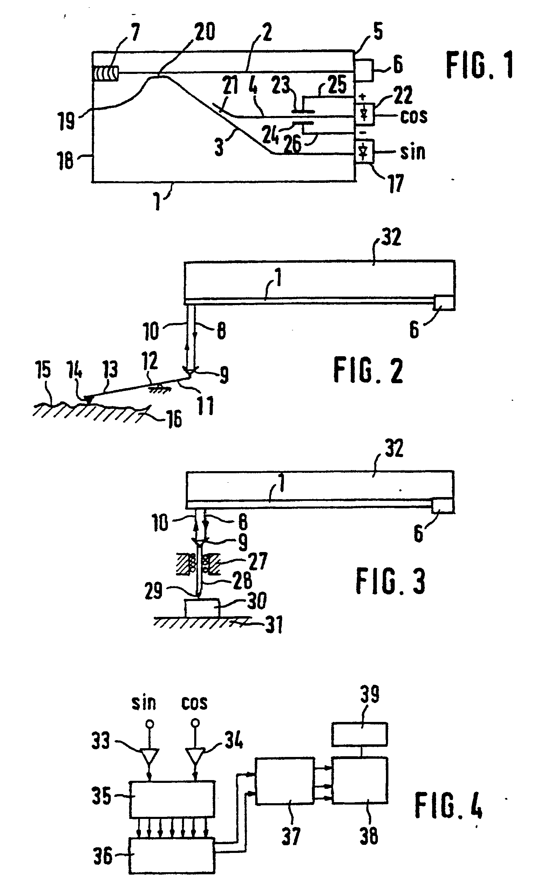

Die optoelektronische Einrichtung gemäß Fig. 1 zeigt eine Platte 1 aus Lithiumniobatkristall oder Siliziumkristall, in deren Oberfläche in an sich bekannter, oben angegebener Weise ein Meßwellenleiter 2, ein Bezugswellenleiter 3 und ein Abzweigwellenleiter 4 gebildet sind. Der Meßwellenleiter führt zu einer Kante 5 der Platte 1, wo ein Laser 6 unmittelbar beispielsweise durch Kleben so angebracht ist, daß sein Licht in den Meßwellenleiter 2 gelangt. Am anderen Ende mündet der Meßwellenleiter 2 in ein Beugungsgitter 7, das das Licht im wesentlichen senkrecht zu der Platte 1 auskoppelt, wie das aus der Seitenansicht in Fig. 2 durch eine Pfeillinie 8 angedeutet ist. Das Licht gelangt auf einen Tripelspiegel 9, der es entsprechend einer Pfeillinie 10 zu dem Beugungsgitter 7 zurückwirft, das es in den Meßwellenleiter 2 zurückleitet. Das Licht gemäß den Pfeillinien 8 und 10 verläuft im wesentlichen parallel.

Der Tripelspiegel 9 befindet sich am Ende eines Armes 11 eines zweiarmigen Hebels 12, dessen anderer Arm 13 an seinem Ende eine Tastspitze 14 aufweist, die zur Verdeutlichung ihrer Funktion als auf einer Oberfläche 15 eines Werkstückes 16 aufliegend dargestellt ist, deren Höhenprofil als Längenänderung in Abhängigkeit von der Profilrichtung beispielsweise festgestellt werden soll.

Der in Fig. 1 gezeigte Bezugswellenleiter 3 erstreckt sich zu der Kante 5, an der eine Fotodiode 17 so angebracht ist, daß sie das Licht aus dem Bezugswellenleiter 3 auffängt und es in ein entsprechendes elektrisches Strom- oder Spannungssignal umwandelt. Das andere Ende des Bezugswellenleiters 3 erstreckt sich bis zu einer Kante 18 der Platte 1, die glatt geschliffen und wenigstens im Bereich der Mündung des Bezugswellenleiters 3 spiegelnd ist, so daß an dem Ende des Bezugswellenleiters 3 ein Spiegel 19 gebildet ist.

Der Bezugswellenleiter 3 nähert sich über eine kurze Wegstrecke dem Meßwellenleiter 2, so daß ein Koppelelement 20 gebildet ist. Der Abzweigwellenleiter 4 nähert sich mit seinem Ende dem Bezugswellenleiter 3, so daß ein Koppelelement 21 gebildet ist. Mit seinem anderen Ende mündet der Abzweigwellenleiter 4 im Bereich einer dort angebrachten Fotodiode 22, die das Licht aus dem Abzweigwellenleiter 4 auffängt und in ein entsprechendes elektrisches Spannungssignal umwandelt. Über eine kurze Wegstrecke sind zu beiden Seiten des Abzweigwellenleiters 4 Elektroden 23 und 24 angeordnet, die über Leitungen 25 und 26 an eine einstellbare Gleichspannungsquelle angeschlossen sind, was rein schematisch durch ein Plus- und Minuszeichen angedeutet ist. Durch Einstellung der Gleichspannung an den Elektroden 25 und 26 ist die Phasenlage des Lichts an der Fotodiode 22 gegenüber der des Lichts an der Fotodiode 17 so eingestellt, daß die Phase des elektrischen Stroms am Ausgang der Fotodiode 22 gegenüber der an der Fotodiode 17 um 90° verschoben ist.

Um die Stabilität zu vergrößern, ist mit der Platte 1 in den Fig. 2 und 3 ein Peltierelement 32 fest verbunden, das die Aufgabe hat, die Temperatur des Interferometers auf einen konstanten Wert zu stabilisieren.

Zur Eliminierung von Rausch- und Drifterscheinungen kann der Laser oder das Laserlicht mit einer Trägerfrequenz moduliert sein, das dann in üblicher Technik zur trägerfrequenten Signalverarbeitung weiterverarbeitet wird.

Wird bei Gebrauch der Einrichtung gemäß den Fig. 1 und 2 die Tastspitze 14 relativ zu der Oberfläche 15 des Werkstücks 16 in der Ebene der Oberfläche 15 verschoben, so ändert sich die Höhenlage der Tastspitze 14 entsprechend dem Feinprofil der Oberfläche 15. Der Tripelspiegel 9 ändert seine Lage relativ zu dem Beugungsgitter 7 auf der Platte 1 entsprechend, so daß sich der Weg des Lichts entlang den Pfeillinien 8 und 10 zu dem Tripelspiegel 9 hin und zurück entsprechend ändert, wodurch sich das Interferenzmuster in dem Bezugswellenleiter 3 ändert, das proportional der Bewegung der Tastspitze 14 ist und an der Fotodiode 17 als Änderung des Ausgangsstromes erscheint.

Fig. 3 zeigt eine Abwandlung der Ausführungsform gemäß Fig. 1. Übereinstimmende Teile sind mit gleichen Bezugsziffern versehen. Der Unterschied besteht darin, daß sich der Tripelspiegel 9 am oberen Ende eines durch eine Führung 27 vertikal verschieblich gehaltenen Meßstößels 28 angeordnet ist, an dessen unteren Ende sich eine Tastspitze 29 befindet, die auf einem Werkstück 30 aufliegt, das auf einem Tisch 31 ruht.

Fig. 4 zeigt ein Blockschaltbild zur Auswertung und Anzeige der Ausgangsspannungen der Fotodioden 17 und 22, die zur Verdeutlichung ihrer gegenseitigen Phasenlage als Sinus-und Kosinus-Signale angedeutet sind. Nach Strom-Spannungswandlung und Verstärkung in Verstärkern 33 und 34 folgt die Drehfeldinterpolation in einem Drehfeldinterpolator 35, der eine volle Periode des Drehfeldes von 360° in n Teile unterteilen kann. Eine volle Drehfeldperiode entspricht einer Verschiebung des Meßspiegels um λ/2 der Laserwellenlänge. Ein folgender Rechteckformer 36 mit Zählrichtungsdiskriminator 37 bereitet das Signal für einen Vor-Rückwärtszähler 38 auf, an den eine Anzeigeeinrichtung 39 angeschlossen ist. Bewegt sich der Tripelspiegel 9 in eine Richtung, so eilt das Signal an der Fotodiode 22 dem an der Fotodiode 17 um 90° vor, und der Vor-Rückwärtszähler 38 zählt in eine Richtung. Kehrt der Tripelspiegel 9 die Bewegungsrichtung um, so eilt das Signal an der Fotodiode 22 dem an der Fotodiode 17 um 90° nach, und der Vor-Rückwärtszähler 38 kehrt auch seine Zählrichtung um. Der Vor-Rückwärtszähler 38 zählt jeweils n Teile von Drehfeldumläufen. Die so erreichbare Auflösung für den Meßhub hängt somit nur von der Größe der Drehfeldunterteilung und von der Stabilität des Gesamtsystems ab.

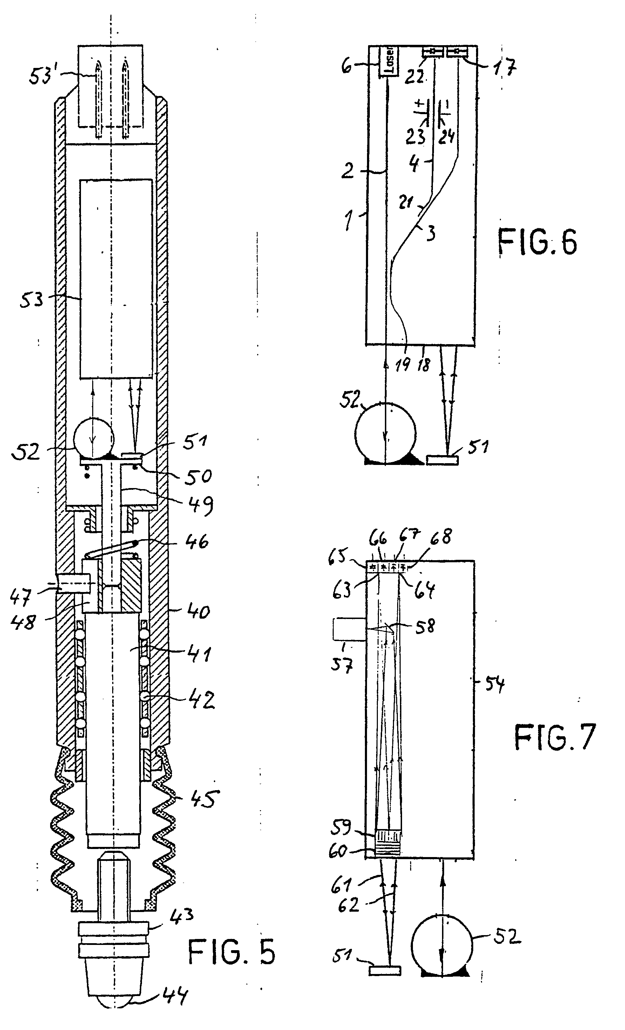

Fig. 5 zeigt im Schnitt einen Längenmeßtaster zur Absolutmessung. In einem Gehäuse 40 ist ein Stößel 41 mittels einer Rollenführung 42 in Achsrichtung verschieblich gelagert. Der Stößel 41 ragt aus dem Gehäuse 40 heraus und ist dort mit einem getrennt dargestellten Teil 43 versehen, an dessen Ende sich eine kugelförmige Tastspitze 44 befindet. Der Stößel 41 ist durch einen Balg 45 gegen Staub geschützt.

Der Stößel 41 ist durch eine Wendelfeder 46 in Auflagerichtung der Tastspitze 44 vorgespannt und in seiner Bewegung durch einen Zapfen 47 begrenzt, der in eine Nut 48 eingreift.

Der Stößel 41 weist an seinem hinteren Ende eine Stange 49 auf, an deren Ende sich ein Teller 50 befindet, auf dem ein Planspiegel 51 und eine Glaskugel 52 aufgeklebt sind. Im Abstand zu diesem ist eine optoelektronische Baueinheit 53 angeordnet, die über Steckkontakte 54 an einen nicht dargestellten Zähler für das Interferometer und an einen nicht dargestellten Vergleicher für das Fokuslagenmeßsystem angeordnet sind.

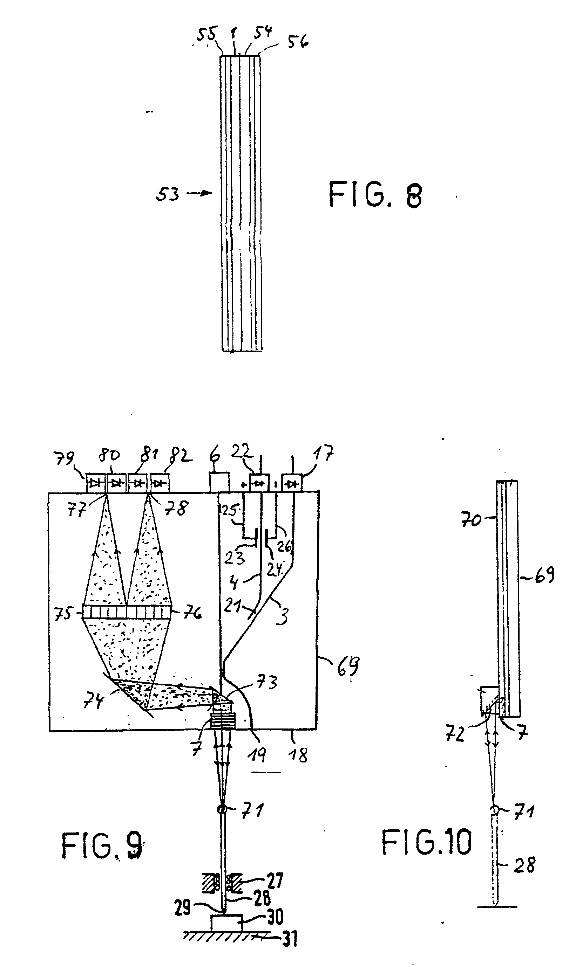

Fig. 8 zeigt vereinfacht die optoelektronische Einheit 53 und verdeutlicht ihren Aufbau aus zwei Platten 1 und 54 mit lichtleitenden Schichten 55 und 56. Die Platte 1 ist die aus dem Ausführungsbeispiel gemäß Fig. 1, wobei in der lichtleitenden Schicht 55 die gleichen optischen Mittel wie in Fig. 1 vorgesehen sind, und daher sind die gleichen Bezugszeichen verwendet. Lediglich ist das Beugungsgitter 7 entfallen, so daß das Licht aus dem Meßwellenleiter 2 an der Kante in Plattenrichtung austritt, wie das in den Fig. 5 bis 7 gezeigt ist. Die Funktion der optischen Elemente auf der Platte 1 als Interferometer ist die gleiche wie die, die in Verbindung mit Fig. 1 beschrieben worden ist. Bei Änderung des Abstandes der Kugel 52 zu der Platte 1 entstehen an den Fotodioden 17 und 22 elektrische Spannungen, die entsprechend der Interferenz und damit der relativen Änderung des Abstandes zwischen Kugel 52 und Platte 1 entsprechen.

Entsprechend dem Aufbau gemäß Fig. 8 ist die Platte 1 mit einer Platte 54 verklebt. Die lichtleitende Schicht 56 ist über ihre gesamte Ausdehnung gleichförmig, so daß sich ein Strahlengang gemäß Fig. 7 ausbilden kann. Ein Laser 57 ist seitlich an der Platte 54 angebracht und strahlt auf einen um 45° geneigten Spiegel 58, der das Licht auf Fokussiergitter 59 und 60 richtet, so daß austretende Strahlen 61 und 62 auf die Oberfläche des Spiegels 51 fokussiert sind.

Von dem Spiegel 51 gelangt das Licht wieder zurück in die Fokussiergitter 60 und 59, wobei das letztere als Strahlenteiler wirkt und jeweils die Hälfte des Lichts auf zwei verschiedene Fokuspunkte 63 und 64 fokussiert, die genau zwischen Dioden 65 und 66 einerseits und Dioden 67 und 68 andererseits liegen, wenn sich der Spiegel 51 genau im Fokus der Strahlen 61 und 62 befindet. An die Dioden 65 bis 68 sind Vergleicher angeschlossen, die bei der dargestellten Fokuslage ein Signal an den zuvor erwähnten Zähler für die Interferenzwerte abgibt, um den Zähler auf null zu stellen.

Bewegt sich der Spiegel 51 aufgrund einer Bewegung der Tastspitze 44, so wird der Zähler immer dann auf null gestellt und damit der Absolutwert hergestellt, wenn der Spiegel 51 die genaue Fokuslage durchläuft.

Fig. 9 zeigt in der Draufsicht und Fig. 10 in der Seitenansicht eine Platte 69 mit einer lichtleitenden Schicht 70, auf der in Fig. 9 auf der rechten Seite ein Interferometer ausgebildet ist, wie es in Fig. 1 gezeigt ist. Daher sind auch hier die gleichen Bezugsziffern für die gleichen Teile verwendet. Die Anordnung des Meßstößels 28 ist die aus Fig. 3, so daß auch hier wieder gleiche Bezugsziffern verwendet sind. Statt des Tripelspiegels 9 am oberen Ende des Meßstößels 28 ist eine Glaskugel 71 vorgesehen. Das von dieser zurückgeworfene Licht gelangt in genau der gleichen Weise in das Interferometer, wie das in Verbindung mit Fig. 1 beschrieben worden ist. Zusätzlich ist hier ein Umlenkspiegel 72 vorgesehen, so daß sich der Meßstößel 28 ungefähr in Richtung der Platte 69 erstrecken kann, so daß ein insgesamt flaches Gebilde vorhanden ist, durch das eine sehr geringe Bauhöhe oder Breite erzielbar ist.

Das von der Glaskugel 71 zurückgeworfene Licht wird durch einen teildurchlässigen Spiegel teilweise abgezweigt und gelangt über einen Umlenkspiegel 74 zu Fokussiergittern 75 und 76, die jeweils die Hälfte des Lichts auf Fokuspunkte 77 und 78 fokussieren, die genau zwischen Paaren von Fotodioden 79, 80 und 81, 82 liegen, wenn sich der reflektierende Punkt der Glaskugel 71 genau im Fokus befindet. An die Fotodioden 79-82 sind genauso wie bei der Ausführungsform gemäß Fig. 7 nicht dargestellte Vergleicher angeschlossen, die dann, wenn die Fotodioden der jeweiligen Paare gleichmäßig belichtet sind, also die Fokuspunkte 77, 78 genau zwischen den Fotodioden liegen, ein Signal abgeben, um den an die Fotodioden 17 und 22 angeschlossenen Zähler auf null zu stellen.

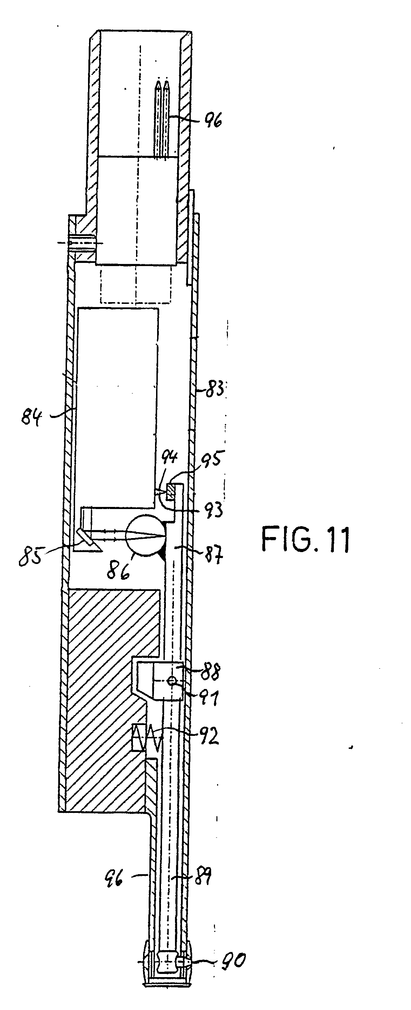

Fig. 11 zeigt ein Ausführungsbeispiel mit einem zylindrischen Gehäuse 83, in dem wie bei dem Ausführungsbeispiel gemäß Fig. 5 eine optoelektronische Einheit 84 ähnlich der optoelektrischen Einheit 53 in Fig. 5 angeordnet ist. Der prinzipielle Aufbau ist der gleiche wie in den Fig. 6 und 7. Ein Unterschied besteht darin, daß zusätzlich ein Umlenkspiegel 85 für das Interferometer vorgesehen ist, um das Licht aus dem Meßwellenleiter 2 (Fig. 6) um 90° umzulenken, und zwar in die Bewegungsrichtung einer Kugel 86, die sich an einem hinteren Ende eines Doppelhebels 88 befindet, an dessen äußerem Arm 89 sich eine Tastspitze 90 befindet. Der Doppelhebel 88 dreht sich um einen Zapfen 91 und ist mittels einer Wendelfeder 92 in Abtastrichtung vorgespannt.

Ein weiterer Unterschied bezüglich der optoelektronischen Einheit 84 gegenüber der optoelektronischen Einheit 53 gemäß Fig. 5 besteht darin, daß Strahlen 93 und 94 seitlich aus der optoelektronischen Einheit 84 austreten und dort auf einen Spiegel 95 gerichtet sind, der dem Spiegel 51 in den Fig. 6 oder 7 entspricht. Innerhalb der optoelektronischen Einheit 84 befindetsich ein nicht dargestellter Umlenkspiegel, so daß der Strahlengang danach wieder der gleiche ist wie in Fig. 7.

Der Arm 89 ist durch ein Rohr 96 geschützt, aus dem die Tastspitze 9 durch eine Öffnung ragt. Am anderen Ende des Gehäuses 83 befinden sich wieder Steckkontakte 96, die den Steckkontakten 53' in Fig. 5 entsprechen.

## Patentansprüche

1. Vorrichtung zur Messung kleiner Längen, mit einer in Richtung der zu messenden Länge beweglich gelagerten Tastspitze, mit einem optischen Interferometer zur Umwandlung der Bewegungen eines mit der Tastspitze oder mit einem sich mit der Tastspitze bewegenden Teil verbundenen Meßspiegels in entsprechende elektrische Signale und mit einer Anzeigeeinrichtung zur Anzeige dieser Signale, **dadurch gekennzeichnet,**

daß das optische Interferometer einen Meßwellenleiter (2) und einen Bezugswellenleiter (3) aufweist, die in an sich bekannter Weise in oder auf der Oberfläche einer gemeinsamen Platte (1) gebildet sind,

daß das eine Ende des Meßwellenleiters (2) mit einem Laser (6) verbunden ist,

daß das andere Ende des Meßwellenleiters (2) mit einer optischen Einrichtung verbunden ist, die das Licht in Bewegungsrichtung der Tastspitze auf den im Abstand angeordneten Meßspiegel (9) richtet, der das Licht zu der optischen Einrichtung zurückwirft,

daß der Bezugswellenleiter (3) mit dem Meßwellenleiter (2) gekoppelt ist,

der mit seinem einen Ende unmittelbar an einem Spiegel, insbesondere einer spiegelnden oder verspiegelten Seitenkante (18) der Platte (1) endet, die somit für den Bezugswellenleiter (3) einen Spiegel (19) bildet,

und daß sich der Bezugswellenleiter (3) an seinem anderen Ende bis zu einer Kante (5) der Platte (1) erstreckt und dort mit einem unmittelbar an dieser Kante (5) angebrachten lichtelektrischen Wandler (17) verbunden ist,

welcher mit der Anzeigeeinrichtung zur Anzeige des elektrischen Ausgangssignals des lichtelektrischen Wandlers (17) verbunden ist.

2. Vorrichtung nach Anspruch 1, **dadurch gekennzeichnet,** daß die optische Einrichtung eine Linsenanordnung oder ein Beugungsgitter (7) ist, die bzw. das das Licht im wesentlichen parallel auf den Spiegel lenkt.

3. Vorrichtung nach Anspruch 1, **dadurch gekennzeichnet,** daß sich der Meßspiegel an einem Ende eines zweiarmigen Hebels (12) befindet, dessen anderes Ende die Tastspitze (14) aufweist.

4. Vorrichtung nach Anspruch 1, **dadurch gekennzeichnet,** daß sich der Meßspiegel an einem Ende eines parallel geführten Meßstößels (28) befindet, dessen anderes Ende die Tastspitze (29) aufweist.

5. Vorrichtung nach Anspruch 1, **dadurch gekennzeichnet,** daß der Meßspiegel ein Planspiegel, ein Tripelspiegel (9) oder eine Glaskugel ist.

6. Vorrichtung nach Anspruch 1, **dadurch gekennzeichnet,** daß die Anzeigeeinrichtung ein Zähler ist.

7. Vorrichtung nach Anspruch 6, **dadurch gekennzeichnet,**

daß der Bezugswellenleiter (3) mit einem an sich bekannten Abzweigwellenleiter (4) gekoppelt ist,

daß das Ende des Abzweigwellenleiters (4) mit einem weiteren lichtelektrischen Wandler (22) verbunden ist,

daß der Abzweigwellenleiter (4) eine Phaseneinstelleinrichtung (23-26) zur Einstellung der Phase an dem weiteren lichtelektrischen Wandler (22) aufweist, derart, daß die Phase des Lichts an dem lichtelektrischen Wandler (17) um 90° verschoben ist gegenüber dem an den Abzweigwellenleiter (4) angeschlossenen weiteren lichtelektrischen Wandler (22) und so bei den elektrischen Ausgangssignalen der beiden lichtelektrischen Wandler (17, 22) ein Drehfeld auftritt, und

daß eine Einrichtung (17-26) vorgesehen ist, die die Drehrichtung des Drehfeldes bestimmt und in Abhängigkeit davon die Zählrichtung des als Vor-Rückwärtszähler ausgebildeten Zählers steuert.

8. Vorrichtung nach Anspruch 7, **dadurch gekennzeichnet,** daß eine Teilereinrichtung vorgesehen ist, die die das Drehfeld bildenden elektrischen Ausgangssignale in eine Anzahl von Einzelwerten unterteilt, und daß der Vor-Rückwärtszähler diese Einzelwerte zählt.

9. Vorrichtung nach Anspruch 1, **dadurch gekennzeichnet,** daß der Laser (6) und/oder die lichtelektrischen Wandler (17, 22) unmittelbar an einer Kante (5) der Platte (1) angebracht sind, an der das zugehörige Ende des jeweiligen Wellenleiters (2, 3, 4) endet.

10. Vorrichtung nach Anspruch 9, **dadurch gekennzeichnet,** daß die Phaseneinstelleinrichtung durch zwei Elektroden (23, 24) gebildet ist, die sich zu beiden Seiten des Bezugswellenleiters (3) über einen Teil desselben erstrecken und an eine einstellbare Gleichspannung angeschlossen sind.

11. Vorrichtung nach Anspruch 9, **dadurch gekennzeichnet,** daß die das Licht auf den Meßspiegel richtende optische einrichtung durch ein Beugungsgitter gebildet ist, das auf der Oberfläche der Platte (1) angeordnet ist.

12. Vorrichtung nach Anspruch 9, **dadurch gekennzeichnet,** daß die lichtelektrischen Wandler (17, 22) und/oder der Laser in die Platte (1) integriert sind.

13. Vorrichtung nach Anspruch 6, **dadurch gekennzeichnet,** daß ein optoelektronischer Entfernungsmesser vorgesehen ist, der ein von der Entfernung der Tastspitze zu dem Interferometer abhängiges elektrisches Signal erzeugt, und daß Mittel vorgesehen sind, die auf einen vorgegebenen Wert des elektrischen Signals ansprechen und den Zähler auf null stellen.

14. Vorrichtung nach Anspruch 13, **dadurch gekennzeichnet,** daß der optoelektronische Entfernungsmesser ein Fokuslagenmeßsystem ist mit einem Laser (57), dessen Licht über eine erste Fokussiereinrichtung auf einen an der Tastspitze oder an einer sich mit der Tastspitze bewegenden Einrichtung (41, 49, 50) angeordneten Spiegel (51) fällt, der das Licht in die Fokussiereinrichtung zurückwirft, der eine zweite Fokussiereinrichtung nachgeordnet ist, die das Licht auf zwei dicht benachbarte Fotodioden (65, 66) fokussiert, derart, daß bei genau im Fokus liegendem Spiegel (51) der Fokus des auf die Fotodioden (65, 66) fokussierten Lichts symmetrisch auf oder zwischen die Fotodioden (65, 66) fällt, wobei an die Fotodioden (65, 66) ein Vergleicher angeschlossen ist, der bei Gleichheit der von den beiden Fotodioden (65, 66) abgegebenen elektrischen Signale ein Ausgangssignal erzeugt, das den mit dem Vergleicher verbundenen Zähler auf null zurückstellt.

15. Vorrichtung nach Anspruch 14, **gekennzeichnet durch** eine Platte (54) mit einer lichtleitenden Schicht (56), in der die erste und zweite Fokussiereinrichtung in an sich bekannter Weise als Fokussiergitter (60, 59) ausgebildet und an die der Laser (57) und die Fotodioden (65, 66) angekoppelt sind.

16. Vorrichtung nach Anspruch 14, **dadurch gekennzeichnet,** daß der Laser (6) für das Fokuslagenmeßsystem durch den Laser (6) für das Interferometer gebildet ist, daß der Spiegel der Meßspiegel (71) ist und daß in dem Meßwellenleiter (2) schräg ein teildurchlässiger Spiegel (73) angeordnet ist, der einen Teil des von dem Meßspiegel (71) reflektierten Lichts abzweigt und auf die zweite Fokussiereinrichutng (75, 76) lenkt.

17. Vorrichtung nach den Ansprüchen 9 und 15, **dadurch gekennzeichnet,** daß die beiden Platten (1, 54) für das Interferometer und das Fokuslagenmeßsystem flächig miteinander verklebt sind oder wenigstens teilweise aus einem gemeinsamen Stück bestehen.

18. Vorrichtung nach Anspruch 15, **dadurch gekennzeichnet,** daß vorzugsweise dicht über dem ersten Fokussiergitter (7) ein Umlenkspiegel (72) mit einer Neigung von ungefähr 45° zur Platte (69) angeordnet ist.

**Claims**

1. A device for measuring small lengths, having a probe tip movably mounted in the direction of the length to be measured, having an optical interferometer to convert the movements of a measuring mirror connected to the probe tip or to a part moving with the probe tip into corresponding electrical signals and having an indicating element to indicate these signals,

**characterised in that** the optical interferometer comprises a measurement waveguide (2) and a reference waveguide (3) which are formed in a way known per se in or on the surface of a mutual plate (1),

**in that** one end of the measurement waveguide (2) is connected to a laser (6),

**in that** the other end of the measurement waveguide (2) is connected to an optical appliance which directs the light in the direction of movement of the probe tip onto the spaced measuring mirror (9), which reflects the light to the optical appliance,

**in that** the reference waveguide (3) is coupled with the measurement waveguide (2),

which with one end ends directly on a mirror, in particular a reflective or metal-coated side edge (18) of the plate (1), which thus forms a mirror (19) for the reference waveguide (3),

**and in that** the reference waveguide (3) extends at its other end to an edge (5) of the plate (1) and is connected there to a photoelectric transformer (17) mounted directly on this edge (5),

which is connected to the indicating element to indicate the electrical output signal of the photoelectric transformer (17).

2. A device according to Claim 1,
   **characterised in that** the optical appliance is a lens arrangement or a diffraction grid (7) which directs the light roughly parallel onto the mirror.

3. A device according to Claim 1,
   **characterised in that** the measuring mirror is located on one end of a two-armed lever (12), the other end of which comprises the probe tip (14).

4. A device according to Claim 1,
   **characterised in that** the measuring mirror is located on one end of a ram guided parallel (28), the other end of which comprises the probe tip (29).

5. A device according to Claim 1,
   **characterised in that** the measuring mirror is a plane mirror, a triple mirror (9) or a glass ball.

6. A device according to Claim 1,
   **characterised in that** the indicating element is a counter.

7. A device according to Claim 6,
   **characterised in that** the reference waveguide (3) is coupled to a branch waveguide (4) known per se,

**in that** the end of the branch waveguide (4) is connected to a further photoelectric transformer (22),

**in that** the branch waveguide (4) comprises a phase adjustment appliance (23 - 26) for adjusting the phase to the further photoelectric transformer (22) so that the phase of the light to the photoelectric transformer (17) is displaced by 90° in comparison with the further photoelectric transformer (22) connected to the branch waveguide (4) and thus a rotary field occurs with the electrical output signals of the two photoelectric transformers (17, 22)

**and in that** an appliance (17 - 26) is provided which determines the direction of rotation of the rotary field and in dependence thereon controls the counting direction of the counter constructed as a count-up/count-down counter.

8. A device according to Claim 7,
   **characterised in that** a separating appliance is provided which divides the electrical output signals forming the rotary field into a number of individual values,
   **and in that** the count-up/countdown counter counts these individual values.

9. A device according to Claim 1,
   **characterised in that** the laser (6) and/or the photoelectric transformer (17, 22) are directly mounted on one edge (5) of the plate (1), on which the appropriate end of the respective waveguide (2, 3, 4) ends.

10. A device according to Claim 9,
    **characterised** in that the phase adjustment device is formed by two electrodes (23, 24), which extend to both sides of the reference waveguide (3) over a part thereof and are connected to an adjustable direct voltage.

11. A device according to Claim 9,
    **characterised in that** the optical appliance directing the light to the measuring mirror is formed by a diffraction grid which is disposed on the surface of the plate (1).

12. A device according to Claim 9,
    **characterised in that** the photoelectric transformers (17, 22) and/or the laser are integrated in the plate (1).

13. A device according to Claim 6,
    **characterised in that** an optoelectronic distance measuring device is provided, which produces an electrical signal as a function of the distance of the probe tip from the interferometer,

**and in that** means are provided which respond to a predetermined value of the electrical signal and set the counter to zero.

14. A device according to Claim 13, **characterised in that** the optoelectronic distance measuring device is a focus location measuring system having a laser (57), the light of which falls via a first focusing appliance onto a mirror (51) disposed on the probe tip or on an appliance (41, 49, 50) moving with the probe tip, which reflects the light into the focusing appliance, after which a second focusing appliance is inserted, which focuses the light onto two closely located photodiodes (65, 66) so that in the case of a mirror (51) exactly in focus the focus of the light focused on the photodiodes (65, 66) falls symmetrically on or between the photodiodes (65, 66), with a comparator being connected to the photodiodes (65, 66), which, when the electrical signals emitted by the two photodiodes (65, 66) are equal, produces an output signal which resets the counter connected to the comparator to zero.

15. A device according to Claim 14, **characterised by** a plate (54) having a photoconductive layer (56), in which the first and second focusing appliances are constructed in a way known per se as focusing grids (60, 59) and to which the laser (57) and the photodiodes (65, 66) are coupled.

16. A device according to Claim 14, **characterised in that** the laser (6) for the focus location measuring system is formed by the lasers (6) for the interferometer, **in that** the mirror is the measuring mirror (71) **and in that** in the measurement waveguide (2) a partially translucent mirror (73) is obliquely disposed, which branches a part of the light reflected from the measuring mirror (71) and directs it onto the second focusing appliance (75, 76).

17. A device according to Claims 9 and 15, **characterised in that** the two plates (1, 54) for the interferometer and the focus location measuring system are glued to one another in two dimensions or consist at least partially of a mutual piece.

18. A device according to Claim 15, **characterised in that** a tilted mirror (72) having an inclination of roughly 45° to the plate (69) is disposed preferably just above the first focusing grid (7).

## Revendications

1. Dispositif pour mesurer des petites longueurs, avec une pointe de contact montée mobile en direction de la longueur a mesurer, avec un interféromètre optique pour la conversion en signaux électriques correspondants des déplacements d'un miroir de mesure relié à la pointe de contact ou a une pièce se déplaçant avec la pointe de contact, et avec un dispositif d'affichage pour l'affichage de ces signaux, caractérisé en ce

que l'interféromètre optique présente un guide d'ondes de mesure (2) et un guide d'ondes de référence (3) qui sont formés de manière connue en soi sur la surface d'une plaque commune (1),

que l'une des extrémités du guide d'ondes de mesure (2) est reliée à un laser (6),

que l'autre extrémité du guide d'ondes de mesure (2) est reliée à un dispositif optique qui dirige la lumière en direction de déplacement de la pointe de contact sur le miroir de mesure (9) disposé à écartement, qui renvoie la lumière au dispositif optique,

que le guide d'ondes de référence (3) est accouplé au guide d'ondes de mesure (2) qui se termine par une de ses extrémités immédiatement sur un miroir, en particulier une arête latérale (18) réfléchissante ou métallisée de la plaque (1) qui forme ainsi un miroir (19) pour le guide d'ondes de référence (3).

et que le guide d'ondes de référence (3) s'étend à son autre extrémité jusqu'à une arête (5) de la plaque (1) et y est relié à un convertisseur photoélectrique (17) disposé directement sur cette arête (5),

qui est relié au dispositif d'affichage pour l'affichage du signal électrique de sortie du convertisseur photoélectrique (17).

2. Dispositif selon la revendication 1, caractérisé en ce que le dispositif optique est un groupe de lentilles ou un réseau de diffraction (7) qui dirige la lumière sensiblement parallèlement sur le miroir.

3. Dispositif selon la revendication 1,

caractérisé en ce que le miroir de mesure se trouve à une extrémité d'un levier (12) à deux bras dont l'autre extrémité présente la pointe de contact (14).

4. Dispositif selon la revendication 1, caractérisé en ce que le miroir de mesure se trouve à une extrémité d'un coulisseau de mesure (28) guidé parallèlement dont l'autre extrémité présente la pointe de contact (29).

5. Dispositif selon la revendication 1, caractérisé en ce que le miroir de mesure est un miroir plan, un miroir triple (9) ou une sphère en verre.

6. Dispositif selon la revendication 1, caractérisé en ce que le dispositif d'affichage est un compteur.

7. Dispositif selon la revendication 6, caractérisé en ce

que le guide d'ondes de référence (3) est accouplé à un guide d'ondes de déviation (4) connu en soi,

que l'extrémité du guide d'ondes de déviation (4) est reliée à un autre convertisseur photoélectrique(22),

que le guide d'ondes de déviation (3) présente un dispositif d'ajustement de phase (23-26) pour régler la phase sur l'autre convertisseur photoélectrique (22) de telle manière que la phase de la lumière sur le convertisseur photoélectrique (17) est décalée de 90° par rapport à celle sur l'autre convertisseur photoélectricité (22) raccordé au guide d'ondes de déviation (3) et qu'il se produit ainsi avec les signaux électriques de sortie des deux convertisseurs photoélectriques (17,22) un champ magnétique rotatif, et qu'un dispositif (17-6) est prévu qui détermine la direction de rotation du champ magnétique rotatif et commande, en fonction de celle-ci, la direction de comptage du compteur réalisé sous forme de compteur-décompteur.

8. Dispositif selon la revendication 7, caractérisé en ce qu'un dispositif partiel est prévu qui divise les signaux électriques de sortie forment le champ magnétique rotatif en un nombre de valeur individuelles, et que le compteur-décompteur compte ces valeurs individuelles.

9. Dispositif selon la revendication 1, caractérisé en ce que le laser (6) et/ou les convertisseurs photoélectriques (17,22) sont montés directement sur une arête (5) de la plaque (1) à laquelle se termine l'extrémité qui en fait partie du guide d'ondes (2,3, 4) respectif.

10. Dispositif selon la revendication 9, caractérisé en ce que le dispositif d'ajustement de phase est formé par deux électrodes (23,24) qui s'étendent des deux côtés du guide d'ondes de référence (3) sur une partie de celui-ci et sont raccordées a une tension continue réglable.

11. Dispositif selon la revendication 9, caractérise en ce que le dispositif optique dirigeant la lumière sur le miroir de mesure est formé par un réseau de diffraction qui est disposé sur la surface de la plaque (1).

12. Dispositif selon la revendication 9, caractérisé en ce que le convertisseur photoélectrique (17,22) et/ou le laser sont intégrés dans la plaque (1).

13. Dispositif selon la revendication 6, caractérisé en ce qu'un télémètre optoélectronique est prévu qui émet un signal électronique dépendant de l'éloignement de la pointe de contact par rapport à l'interféromètre, et que des moyens sont prévus qui répondent à une valeur prédéterminée du signal électrique et mettent le compteur à zéro.

14. Dispositif selon la revendication 13, caractérisé en ce que le télémètre optoélectronique est un système de mesure de position de foyer avec un laser (57) dont la lumière tombe, par l'intermédiaire d un premier dispositif focalisateur, sur un miroir (51) disposé sur la pointe de contact ou sur un dispositif (41, 49, 50) se déplaçant avec la pointe de contact, qui renvoie la lumière dans le dispositif focalisateur, auquel est adjoint un second dispositif focalisateur qui focalise la lumière sur deux photodiodes (65,66) très adjacentes de telle sorte que, avec le miroir (51) se trouvant exactement au foyer, le foyer de la lumière focalisée sur les photodiodes (65,66) tombe symétriquement sur ou entre les photodiodes (65,66), un comparateur étant raccordé aux photodiodes (65,66), qui émet un signal de sortie dans le cas d'une égalité des signaux électriques émis par les deux photodiodes (65,66), qui remet à zéro le compteur raccordé au comparateur.

15. Dispositif selon la revendication 14, caractérisé par une plaque (54) avec une couche photoconductrice (56) dans laquelle sont formés, de manière connue en soi, les premier et second dispositifs focalisateurs sous forme de grille focalisatrice (60,59) et à laquelle sont accouplés le laser (57) et les photodiodes (65,66).

16. Dispositif selon la revendication 14, caractérisé en ce que le laser (6) pour le système de mesure de position de foyer est formé par le laser (6) de l'interféromètre, que le miroir est le miroir de mesure (71), et qu'un miroir (73) partiellement transparent est disposé incliné dans le guide d'ondes de mesure (2), qui dévie une partie de la lumière réfléchie et la dirige sur le second dispositif de focalisation (75,76).

17. Dispositif selon l'une des revendications 9 et 15, caractérisé en ce que les deux plaques-(1,54) pour l'interféromètre et le système de mesure de position de foyer sont collées à plat l'une à l'autre ou sont constituées au moins partiellement d'une pièce commune.

18. Dispositif selon la revendication 15, caractérisé en ce qu'un miroir d'inversion (72) est disposé, de préférence étroitement au-dessus de la première grille de focalisation (7), avec une inclinaison d'environ 45° par rapport à la plaque (69).

FIG. 1

FIG. 2

FIG. 3

FIG. 4

FIG. 5

FIG. 6

FIG. 7

FIG. 8

FIG. 9

FIG.10

FIG. 11